# EUROPÄISCHE PATENTSCHRIFT

(11) **EP 0 808 558 B1**
(45) Veröffentlichungstag und Bekanntmachung des Hinweises auf die Patenterteilung: **30.08.2000**
(21) Anmeldenummer: 97108116.1
(22) Anmeldetag: 20.05.1997
(51) Int. Cl.: A01D 34/62, A01D 34/54

(54) **Spindelmäher mit einem Rollenabstreifer für die Bodenrolle**
Reel mower with scraping means for the ground-engaging roller
Tondeuse cylindrique à râcleur pour le rouleau d'appui

(30) Priorität: 24.05.1996 US 653534
(43) Veröffentlichungstag der Anmeldung: 26.11.1997
(73) Patentinhaber: DEERE & COMPANY, Moline, Illinois 61265-8098 (US)
(72) Erfinder: Swenson, Phillip Orland, Beaver Dam, Wisconsin 53916 (US); Reichen, Ronald Lee, Horicon, Wisconsin 53032 (US); Smith, Larry Neil, Beaver Dam, Wisconsin 53916 (US); Niosi, Donald Emil, Prior Lake, Minnesota 55372 (US)
(74) Vertreter: Feldmann, Bernhard

(56) Entgegenhaltungen:
- EP-A- 0 382 527
- EP-A- 0 552 709
- GB-A- 536 910
- US-A- 4 021 996
- US-A- 4 481 757

## Beschreibung

Die Erfindung bezieht sich auf einen Spindelmäher mit einer von einer Antriebsquelle aus antreibbaren Schneidspindel, einer auf dem Boden laufenden Rolle bzw. einer Bodenrolle und einem von der Antriebsquelle aus antreibbaren Rollenabstreifer für die Bodenrolle, wobei über die auf dem Boden ablaufende Rolle die Schnitthöhe der Schneidspindel einstellbar und die Rolle zusammen mit dem Rollenabstreifer gegenüber der Schneidspindel höhenverstellbar ist.

Derartige Spindelmäher (US-A-4 021 996) weisen in der Regel einen Rahmen auf, der auf einer Spindelwelle die Schneidspindel lagert. Die Schneidspindel arbeit mit einem stationären Untermesser zusammen mit der Folge, dass ein Grasschnitt mit höchster Qualität, wie er beispielsweise auf Golfplätzen erwünscht ist, ausgeführt werden kann. Normalerweise stützen sich solche Spindelmäher bei ihrem Einsatz auf vorderen und rückwärtigen Bodenrollen ab, die gegenüber der Schneidspindel höhenverstellbar sind, wodurch sich die Schnitthöhe für den Spindelmäher einstellen lässt. Die auf dem Boden abrollenden Bodenrollen neigen dazu, dass sich insbesondere an der rückwärtigen Grasreste festsetzen, wodurch die eingestellte Höhe verändert wird. Ein noch ungünstigerer Grasschnitt entsteht, wenn sich an der Bodenrolle Grasklumpen festsetzen. In einem solchen Fall verläuft die Schnittfläche nicht mehr parallel zum Bodenoberfläche. Abhilfe wird hier durch sogenannte Rollenabstreifer geschaffen, die für ihren Umlauf antreibbar sind und dabei mit ihren Borsten die Mantelfäche der Bodenrolle von etwaigen Grasresten befreien. Typischerweise sind diese Rollenabstreifer zusammen mit der zugehörigen Bodenrolle höhenverstellbar und können bei Verschleiß der Borsten noch gegenüber der Bodenrolle verstellt werden. Bei einer Höhenneueinstellung oder bei einer Nachstellung der Abstreiferrolle ändert sich aber der Abstand der Spindelwelle zur Abstreiferrolle, es sei denn, die Abstreiferrolle war unabhängig von der Bodenrolle über ein aufwendiges Gestänge auf einem Bogen, dessen Mittelpunkt die Spindelwelle war, verstellbar. Da bisher der Antrieb der Abstreiferrollen von der Spindelwelle aus über Riemen erfolgte, konnten Abstandsänderungen über eine Spannrolle aufgefangen werden. Dabei wurde in Kauf genommen, dass der Riemen stärker gespannt oder entspannt wurde, worunter die Lebensdauer der Riemen litt. Insbesondere bei Einsätzen in nassem Gras war ein Durchrutschen der Riemen nicht auszuschließen mit der Folge, dass der Antrieb für die Abstreiferrolle ausfiel.

Die mit der Erfindung zu lösende Aufgabe wird darin gesehen, einen Spindelmäher hinsichtlich des Antriebs für die Abstreiferrolle zu verbessern, und zwar zunächst durch ein mit dem Rollenabstreifer drehfest verbundenes Abtriebszahnrad, dessen Drehachse sich vertikal verstellt, wenn der Rollenabstreifer verstellt wird, wobei sich das Abtriebszahnrad gegenüber der Antriebsquelle verstellt, ferner durch ein mit der Antriebsquelle drehfest verbundenes Antriebszahnrad und ein mit dem Abtriebszahnrad und mit dem Antriebszahnrad mittel- oder unmittelbar in Eingriff stehendes Zwischenzahnrad, einen ersten um die Drehachse des Antriebszahnrades verstellbaren Schwenkteil und durch einen zweiten um die Drehachse des Abtriebszahnrades verstellbaren Schwenkteil, wobei das Zwischenzahnrad mit dem ersten und mit dem zweiten Schwenkteil gekoppelt ist. Auf diese Weise ist ein Riementrieb nicht mehr erforderlich und wird durch einen wartungsfreundlichen und verschleißarmen Zahnradtrieb ersetzt. Bei der Höheneinstellung oder bei der Nachstellung der Abstreiferrolle auftretende Abstandsänderungen werden durch ein sich dabei verstellendes Zwischenzahnrad aufgefangen, so dass ein Zahneingriff nicht verloren geht. Der Gesamtmechanismus ist äußerst einfach.

Zweckmäßig kann das Antriebszahnrad mit der Spindelwelle der Schneidspindel gekoppelt sein. Auch sollte das Abtriebszahnrad gegenüber der auf dem Boden ablaufenden Rolle verstellbar sein.

Ferner kann der zweite Schwenkteil über das Abtriebszahnrad verstellbar sein, d. h. wenn das Abtriebszahnrad bei einer Schnitthöhenneueinstellung oder bei einer Nachstellung wegen Verschleißes seine Lage ändert, verstellt sich auch der zweite Schwenkteil, aber auch das Zwischenzahnrad, da das Zwischenzahnrad mit dem zweiten Schwenkteil verstellbar ist, wobei der erste Schwenkteil über das Zwischenzahnrad wiederum verstellbar ist, weil das Zwischenzahnrad an dem ersten Schwenkteil und an dem zweiten Schwenkteil ortsfest gelagert ist.

Das Zwischenzahnrad ist ferner zwangsgeführt, da es nach einem weiteren Vorschlag der Erfindung in einer Konsole vertikal verstellbar geführt ist, die gegenüber der Drehachse des Antriebszahnrades verstellbar ist, d. h. ein leichtes Spiel aufweist.

Da die Abstände zwischen der Spindelwelle und der Abstreiferrolle unterschiedlich sind, kann im Rahmen der Erfindung zwischen dem Antriebszahnrad bzw. dem Abtriebszahnrad und dem Zwischenzahnrad an dem ersten Schwenkteil bzw. an dem zweiten Schwenkteil zusätzlich ein Hilfszahnrad vorgesehen sein.

In der Zeichnung ist ein nachfolgend näher erläutertes Ausführungsbeispiel der Erfindung in zwei Ausführungen dargestellt. Es zeigt:
- Fig. 1: eine Antriebsvorrichtung für eine Abstreiferrolle in auseinander gezogener Darstellung,
- Fig. 2: ein Antriebs-, ein Abtriebs- und ein Zwischenzahnrad an einem ersten und an einem zweiten Schwenkteil,
- Fig. 3: eine Tragplatte mit rückwärtiger Bodenplatte und zugehöriger Abstreiferrolle und
- Fig. 4: eine ähnliche Darstellung wie in Fig. 2, jedoch mit zusätzlichen Hilfszahnrädern.

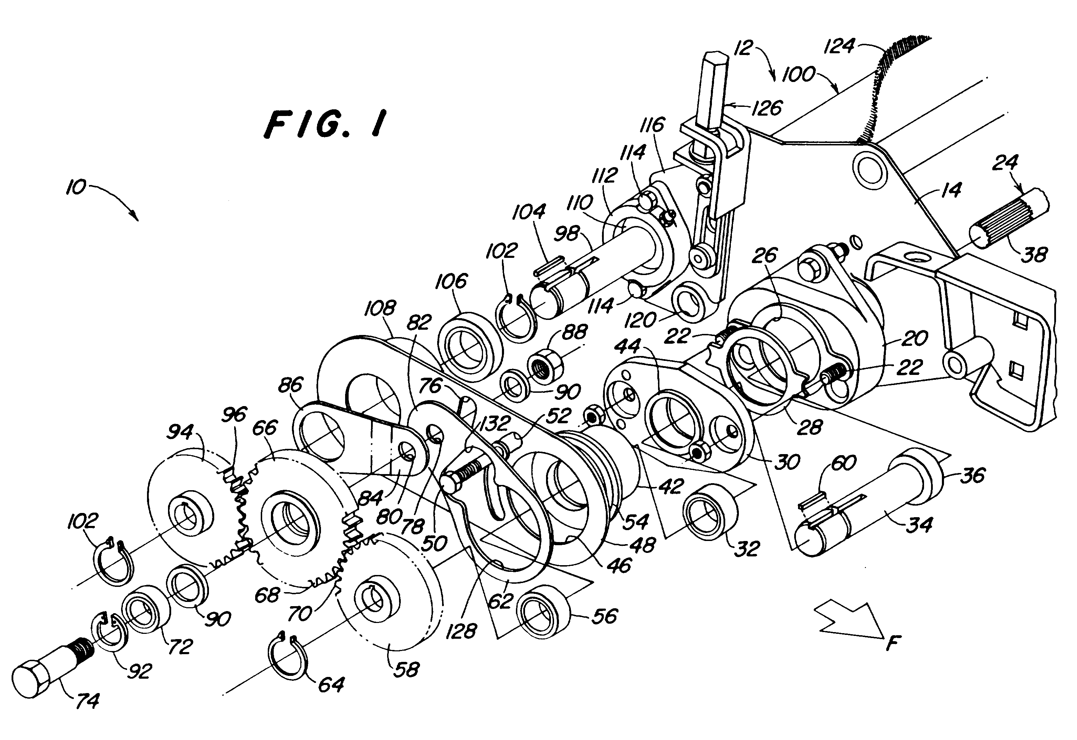

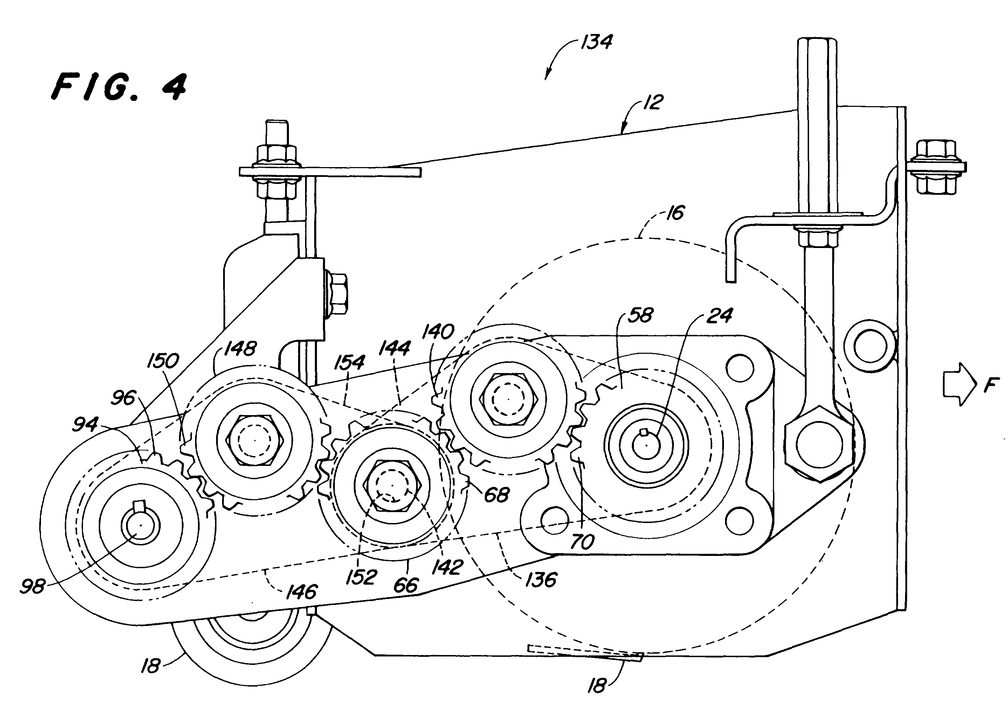

In Fig. 1 der Zeichnung ist ein Antrieb 10 für den umlaufenden Abstreifer mit Bürste für einen nicht im einzelnen gezeigten Spindelmäher in auseinander gezogener Darstelllung wiedergegeben. Die Schneideinheit des Spindelmähers ist mit 12 bezeichnet. Zu ihr gehört ein Rahmen 14, der die umlaufende Schneidspindel 16 mit dem zugehörigen Untermesser 18 aufnimmt. Schneidspindel und Untermesser sind in Fig. 4 erkennbar. Der Mähvorgang erfolgt in herkömmlicher Art und Weise. Im Einsatz wird jede Schneidspindel 16 von einem Hydraulikmotor aus angetrieben, wobei sich die hydraulische Kraftquelle, in der Regel eine Hydraulikpumpe an dem den oder die Spindelmäher tragenden Fahrzeug befindet. Wie aus Fig. 1 ferner hervorgeht, ist an den Rahmen 14 ein Traggehäuse 20 für die Schneidspindel über Schrauben 22 anschließbar. Im montierten Zustand wird die Spindelwelle 24 in einer Öffnung 26 in dem Traggehäuse 20 aufgenommen. Ein Distanzring 28 ist zwischen dem Traggehäuse 20 und einem Deckel 30, der mit dem Traggehäuse verschraubbar ist, vorgesehen. Ein in eine Öffnung in dem Deckel 30 einsetzbares Lager 32 nimmt eine Antriebsnabe 34 auf. Diese ist unter anderem mit einer Innenkeile aufweisenden Öffnung 36 versehen, in die das Ende 38 der entsprechende Außenkeile aufweisenden Spindelwelle 24 der Schneidspindel 16 einsteckbar ist. Der Deckel 30 ist an seiner einen Seite noch mit einem Ringflansch 44 versehen, auf den ein abgestuftes aus zwei Ringteilen bestehendes Distanzstück 42 aufsteckbar ist. Auf den Ringteil mit dem größeren Außendurchmesser ist eine Konsole 48 mit ihrer ersten Öffnung 46 lose aufsetzbar. Eine Schraube 50 mit einer Ringschulter erstreckt sich durch einen Schlitz 52 in der Konsole 48 und kann mit der Ringschulter gegen die Konsole zur Anlage gebracht werden, damit die Konsole 48 in einer richtigen Stellung festgelegt werden kann. Der den größeren Durchmesser aufweisende Ringteil des Distanzstückes 42 ist an seinem Umfang noch mit einem Ringflansch 54 versehen, gegen den die Konsole 48 zur Anlage kommen kann. Ein weiteres in das Distanzstück 42 einsetzbares Lager 56 dient ebenfalls noch zum Lagern des einen Endes der Antriebsnabe 34. Auf dieses Ende der Antriebsnabe 34 ist ein Antriebszahnrad 58 über einen Keil 60 drehfest aufsetzbar, so dass das Antriebszahnrad mit derselben Drehzahl wie die Antriebsnabe umläuft. Ein erster Schwenkplattenteil 62 ist mehr oder weniger lose zwischen dem Antriebszahnrad 58 und der Konsole 48 für den Abstreifer vorgesehen. Über einen Seegerring 64 wird das Antriebszahnrad 58 in seiner Lage auf dem Ende der Antriebsnabe 34 gehalten.

In die Zähne 70 des Antriebszahnrades 58 greifen die Zähne 68 eines Zwischenzahnrades 66 ein. Das Zwischenzahnrad sitzt auf einem Lager 72, über das das Zwischenzahnrad auf einer Ansatzschraube 74 drehbar gelagert ist. Die Ansatzschraube 74 bildet die Drehachse des Zwischenzahnrades und erstreckt sich bis in einen Schlitz 76 in der Konsole 48 für den Bürstenabstreifer. Gleichfalls erstreckt sich die Ansatzschraube 74 noch durch Bohrungen 78 und 80, die in dem Endteil 82 des ersten Schwenkteils 62 und in dem Endteil 84 eines zweiten Schwenkteils 86 vorgesehen sind. Konsole und erster und zweiter Schwenkteil werden über eine Mutter 88, Unterlegscheiben 90 und einen Seegerring 92 in ihren jeweiligen Stellungen auf der Ansatzschraube gesichert.

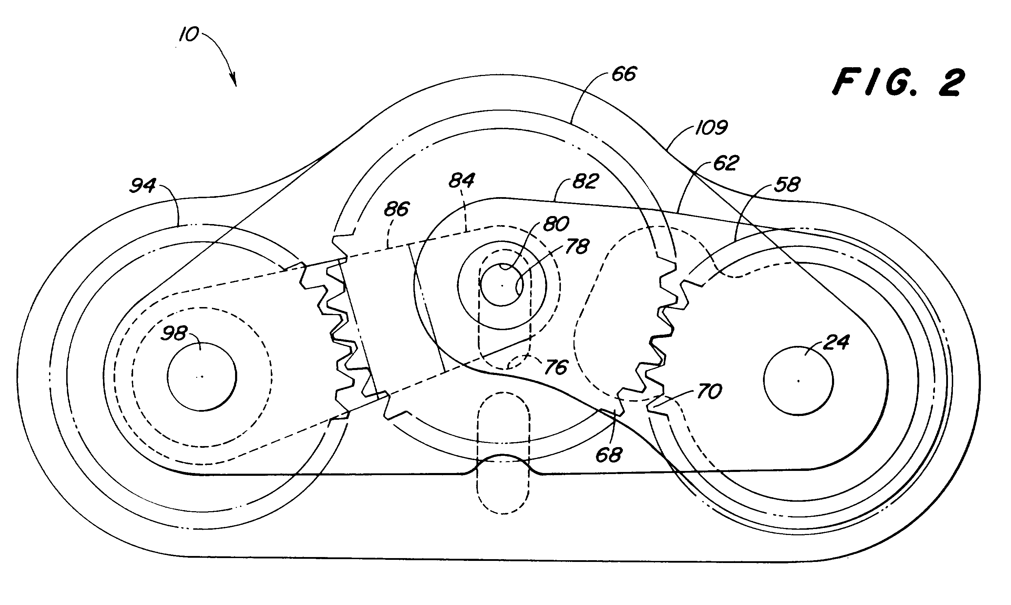

In die Zähne 66 des Zwischenzahnrades 66 greifen die Zähne 96 eines Abtriebszahnrades 94 ein. Dieses sitzt nach dem Zusammenbau auf dem Endstück einer Zentralwelle 98 für eine Bürstenrolle 100 oder einen Rollenabstreifer drehfest auf, die auch die Drehachse des Abtriebszahnrades definiert. Über einen Seegerring 102 können die einzelnen Teile auf der Zentralwelle 98 gesichert werden. Die drehfeste Verbindung zwischen Abtriebszahnrad 94 und Zentralwelle 98 erfolgt über einen Keil 104. Ein die Zentralwelle 98 aufnehmendes Lager 106 wird von einer Nabe 108 aufgenommen, die ihrerseits mit der Konsole 48 fest verbunden ist. Der zweite Schwenkteil 86 sitzt ebenfalls schwenkbar auf der Zentralwelle 98 der Bürstenrolle 100 auf. Über einen in Fig. 2 erkennbaren Deckel 109 wird der Antrieb 10 nach außen hin abgedeckt.

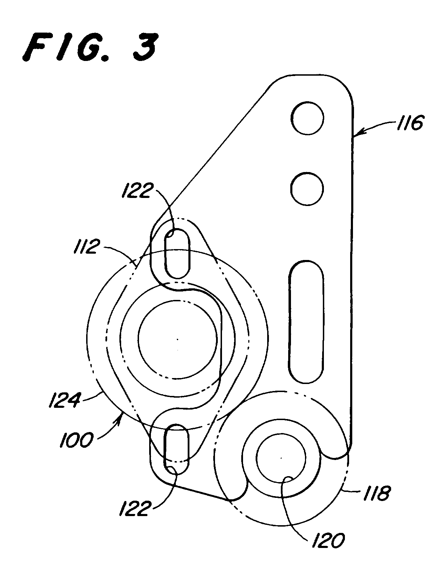

Aus Fig. 1 geht ferner noch hervor, dass die Zentralwelle 98 über ein Lager 110 in einem Gussgehäuse 112 drehbar aufgenommen ist. Das Gussgehäuse 112 selbst ist über zwei Schrauben 114 an einer Tragkonsole 116 angeschlossen, die ihrerseits, wie aus Fig. 3 zu ersehen ist, eine rückwärtige Rolle 118 in einer unteren Öffnung 116 lagert. Die Schrauben 114 erstrecken sich durch in der Tragkonsole 116 vorgesehene Schlitze 122, die nach einem Lockern der Schrauben 114 ein Auf- und Abverstellen der Bürstenrolle gegenüber der Tragkonsole erlauben, was bei einem Verschleiß der Borsten 124 erforderlich werden kann. Die Verstellung macht es möglich, dass die Borsten 124 auch nach einem Verschleiß immer in einer ständigen Anlage gegen die rückwärtige Rolle 118 gehalten werden können. Die Tragkonsole 116 ihrerseits ist an dem Rahmen 14 der Schneideinheit über eine herkömmliche Höheneinstellvorrichtung 126 angeschlosssen, wobei die Höheneinstellvorrichtung von einer Bedienungsperson derart betätigt werden kann, dass die vertikale Stellung der Tragkonsole 116 gegenüber dem Rahmen 14 geändert werden kann, wodurch die Lage der Rolle, die die Höhe bestimmt, in der die Schneidvorrichtung über dem Boden gehalten wird, ebenfalls verändert wird. Damit wird die Schnittthöhe eingestellt.

Die Aufgabe der Bürstenrolle 100 bzw. ihrer Borsten 124 ist es, dass sie im Einsatz gegen die im rückwärtigen Bereich der Schneideinheit 12 vorgesehene rückwärtige Rolle 118 anliegen, um diese von an ihrer Oberfläche haftenden Fremdkörpern, wie insbesondere Grasklumpen oder Grasresten zu befreien. Solche werden durch die Borsten abgewischt, so dass zur Erreichung eines Qualitätsschnittes die Schneideinheit immmer in einer konstanten und vorher eingestellten Höhe über den Boden geführt wird. Möchte die Bedienungsperson die eingestellte Höhe verändern, so hat sie die Höheneinstellvorrichtung am rückwärtigen Ende jeder Schneideinheit zu betätigen. Hierdurch erfolgt eine vertikale Verstellung der Tragkonsole 116 gegen über dem Rahmen 14 der Schneideinheit und somit eine Höhenänderung gegenüber dem Boden bzw. dem zu schneidenden Gras. Da die Bürstenrolle 100 ebenfalls an der Tragkonsole 116 angebaut ist, wird die Bürstenrolle bei einer Höhenänderung zusammen mit der rückwärtigen Rolle 118 mitverstellt. Dies bedeutet aber, dass dann auch die Zentralwelle 98 und das Abtriebszahnrad 94 entsprechend mitverstellt werden, wohingegen das Antriebszahnrad 58 seine Lage gegenüber der Schneideinheit 12 nicht verändert. Aus diesem Grund wird sich bei einer Höheneinstellung das Abtriebszahnrad 94 gegenüber dem Antriebszahnrad 58 verstellen, wodurch sich der Abstand zwischen dem Abtriebszahnrad und dem Antriebszahnrad verändert.

Mit der Zahnradanordnung bei dem bevorzugten Ausführungbeispiel wird erreicht, dass sich diese Abstandsveränderung nicht nachteilig auf die Eingriffsverhältnisse der Zahnräder auswirkt. Im montierten Zustand kämmen die Zähne 68 des Zwischenzahnrades 66 mit den Zähnen 70 des Antriebszahnrades 58 und mit den Zähnen 96 des Abtriebszahnrades 94. Bei einer Vertikalverstellung des Abtriebszahnrades 94 verstellt sich auch das Zwischenzahnrad 66 leicht, bleibt aber mit den Zahnrädern 58 und 94 im Eingriff. Wird beispielsweise das Abtriebszahrad 94 mit Bezug auf das Antriebszahnrad nach unten verstellt, wenn eine größere Schnitthöhe eingestellt wird, so hat das Zwischenzahnrad 66 die Tendenz, auf Grund der Schwerkraft nach unten zu rutschen, so dass seine Zähne 68 mit denen des Abtriebszahnrades 94 und denen des Antriebszahnrades 58 in Eingriff bleiben. Andererseits wird bei einer Verstellung des Abtriebszahnrades mit Bezug auf das Antriebszahnrad nach oben, wenn die Schnitthöhe verringert wird, das Zwischenzahnrad nach oben gedrückt, wodurch wiederum das Zwischenzahnrad 66 mit dem Abtriebszahnrad 94 und dem Antriebszahnrad 58 im Eingriff verbleibt.

Andererseits werden durch den Umlauf der Zahnräder 58 und 94 Kräfte auf das Zwischenzahnrad einwirken, die dieses von seinem Eingriff in das Abtriebszahnrad 94 und in das Antriebszahnrad 58 fortdrücken wollen. Bei dem bevorzugten Ausführungsbeispiel ist jedoch dafür Vorsorge getroffen, dass das Zwischenzahnrad mit dem Abtriebszahnrad und dem Antriebszahnrad im Eingriff bleibt, und zwar unabhängig von der Stellung des Abtriebszahnrades 94 nach einer neuen Höheneinstellung. Hierzu dienen die Schwenkteile. Der erste Schwenkteil 62 ist derart ausgelegt, dass er um die Drehachse des Antriebszahnrades, die durch die Antriebsnabe 34 und die Spindelwelle 24 definiert ist, drehen kann. Hierzu ist der erste Schwenkteil 62 mit einer ersten Öffnung 128 versehen, in der das eine Ende des abgestuften Distanzstückes 42 aufgenommen ist. Die zweite Öffnung 78 an dem Endteil 82 des ersten Schwenkteils 62 nimmt die Ansatzschraube 74, auf der das Zwischezahnrad 66 aufsitzt, auf. Damit erstreckt sich der erste Schwenkteil 62 zwischen dem Antriebszahnrad 58 und dem Zwischenzahnrad 66 und dient dazu, das Zwischenzahnrad 66 auf einem zur Drehachse des Antriebszahnrades 58 festen Abstand zu halten. Der erste Schwenkteil 62 verhindert damit beim Einsatz, dass sich das Zwischenzahnrad 66 von dem Antriebszahnrad 58 fortbewegt bzw. dass die Zähne des Zwischenzahnrades nicht mehr mit denen des Antriebszahnrades kämmen, wobei es nicht darauf ankommt, welche Lage das Zwischenzahnrad nach einer Schnitthöhenneueinstellung einnimmt.

In entsprechender Weise dient der zweite Schwenkteil 86 dazu, das Zwischenzahnrad 66 mit dem Abtriebszahnrad 94 im Eingriff zu halten. Hierzu ist der zweite Schwenkteil mit einer ersten Öffnung 130 versehen, in der die Zentralwelle 98 der Bürstenrolle 100 drehbar gelagert ist. Der äußere Endteil 84 des zweiten Schwenkteils 86 weist die zweite Öffnung 80 auf, die ihrerseits wiederum die Ansatzschraube 74, auf der das Zwischenzahnrad 66 aufsitzt, drehbar aufnimmt. Der zweite Schwenkteil 86 dient damit dazu, den Abstand zwischen dem Zwischenzahnrad 66 und der Achse des Abtriebszahnrades 94 konstant zu halten, so dass im Einsatz die Zähne 68 des Zwischenzahnrades 66 mit dem Zähnen des Abtriebszahnrades 94 immer kämmen, wobei es nicht darauf ankommt, welche Lage das Abtriebszahnrad nach einer Höhenneueinstellung einnimmt. Der zweite Schwenkteil 86 verhindert, damit, dass sich das Zwischenzahnrad 66 während eines Einsatzes von dem Abtriebszahnrad 94 fortbewegt bzw. dass der Zahneingriff in die Zähne 96 des Abtriebszahnrades 94 verloren geht.

Der erste und der zweite Schwenkteil 62 und 82 dienen damit dazu, das Zwischenzahnrad 66 mit dem Abtriebszahnrad 94 und mit dem Antriebszahnrad 58 im Eingriff zu halten, wenn das Abtriebszahnrad 94 bei einer Höhenneueinstellung seine Position gegenüber dem Antriebszahnrad 58 verändert. Wenn das Abtriebszahnrad 94 seine Stellung gegenüber dem Antriebszahnrad 58 verändert, wird sich natürlich auch die Lage des Zwischenzahnrades 66 verändern. Der erste Schwenkteil 62 erlaubt dem Zwischenzahnrad 66, auf einem Bogen mit konstantem Radius um die Drehachse des Antriebszahnrades 58 zu verschwenken. Er verhindert dabei, dass sich das Zwischenzahnrad 66 von der Drehachse des Antriebszahnrades entfernt und bewirkt, dass der Eingriff des Zwischenzahnrades 66 mit dem Antriebszahnrad 58 erhalten bleibt, wenn das Zwischenzahnrad verschwenkt. Da der erste Schwenkteil 62 die Eingriffsverhältnisse zwischen Zwischenzahnrad mit Antriebszahnrad aufrechterhält, hält der zweite Schwenkteil 86 gleichzeitig das Zwischenzahnrad mit dem Abtriebszahnrad 94 im Eingriff. Da sich das Abtriebszahnrad 94 bei einer Schnitthöhenneueinstellung verstellt, schwenkt der zweite Schwenkteil 62 um die Achse des Abtriebszahnrades 94. Das mit dem äußeren Endteil 84 des zweiten Schwenkteils gekuppelte Zwischenzahnrad 66 muss deshalb dann in einem Bogen um die Achse des Abtriebszahnrades 94 verschwenken. Dabei stellt der zweite Schwenkteil 86 sicher, dass der Bogen, auf dem das Zwischenzahnrad 66 um die Drehachse des Abtriebszahnrades verschwenkt, einen konstanten Radius hat. Dadurch, dass das Zwischenzahnrad 66 auf einem konstanten Radius von der Achse des Abtriebszahnrades gehalten wird, verhindert man, dass sich das Zwischenzahnrad 66 von dem Abtriebszahnrad 94 fortbewegt, vielmehr werden die Zähne 68 des Zwischenzahnrades 66 mit den Zähnen 96 des Abtriebszahnrades im Eingriff gehalten, wenn das Zwischenzahnrad 66 um das Abtriebszahnrad 94 verschwenkt. Der erste und der zweite Schwenkteil 62 und 86 verschwenken daher mit Bezug aufeinander, wie ein Scharnier, um betriebsgerechte Eingriffsverhältnisse zwischen Antriebszahnrad 58, Zwischenzahnrad 66 und Abtriebszahnrad 94 aufrechtzuerhalten, wenn bei einer Schnitthöhenneueinstellung sich der Abstand zwischen dem Abtriebszahnrad 94 und dem Antriebszahnrad 58 verändert.

Die Konsole 48 ist derart angeordnet, dass sie mit Bezug auf die Drehachse des Antriebszahnrades 58 und mit Bezug auf die Drehachse des Abtriebszahnrades 94 schwenken kann. Dadurch, dass der erste und der zweite Schwenkteil 62 und 86 gegen die Konsole 48 anliegen, bleiben die beiden Schwenkteile während ihres Einsatzes in ihrer richtigen Ausrichtung und Lage. Die Konsole 48 für die Aufnahme der Bürstenrolle fängt das Schwenken des Abtriebszahnrades 94 mit Bezug auf das Antriebszahnrad 58 während einer Höhenneueinstellung durch ihre erste Öffnung 46 auf, die, wie bereits ausgeführt wurde, das gestufte Distanzstück 42 nur lose umfasst. Ausreichend viel Freiraum besteht zwischen dem abgestuften Distanzstück 42 und dem Innendurchmesser der ersten Öffnung 46 in der Konsole 48 für die Bürstenrolle, damit das Abtriebszahnrad 94 sich während einer Schnitthöhenneueinstellung auf das Antriebszahnrad zu oder von diesem fort verstellen kann. Durch den Freiraum zwischen der ersten Öffnung 46 und dem Distanzstück 42 kann sich die Konsole 48 mit Bezug auf die Achse des Antriebszahnrades 58 verstellen, wenn das Abtriebszahnrad während einer Schnitthöhenneueinstellung seine Lage verändert.

Wenn sich bei der Schnitthöhenneueinstellung der Abstand zwischen dem Antriebszahnrad und dem Abtriebszahnrad ändert, schiebt sich das Zwischenzahnrad 66 zwischen dem Antriebszahnrad und dem Abtriebszahnrad nach oben oder nach unten. Das Zwischenzahnrad 66 ist auf der Ansatzschraube 74 angeordnet, die auch den ersten und den zweiten Schwenkteil 62 und 86 aufnimmt. Femer durchsetzt die Ansatzschraube 74 noch den mehr oder weniger vertikal verlaufenden Schlitz, der in der Konsole 48 vorgesehen ist. Infolge des Schlitzes 76 kann die Ansatzschraube 74 sich zusammen mit dem Zwischenzahnrad 66 auf und ab verstellen, wenn eine Schnitthöhenneueinstelllung vorgenommen wird.

Die erste Öffnung 128 in dem ersten Schwenkteil 62 ist noch mit einem Entlastungsabschnitt 132 versehen, in dem die Ansatzschraube 50 untergebracht ist. Die Ansatzschraube 50 trägt ebenfalls mit dazu bei, dass die Konsole 48 in ihrer Lage gehalten wird. Der Entlastungsabschnitt 132 ist wesentlich größer als die Entlastungsschraube 50 dimensioniert, so dass zwischen den Innenkanten des Entlastungsabschnittes 132 und der Ansatzschraube 50 genügend viel Freiraum geschaffen ist, wenn der erste Schwenkteil 62 um die Achse des Antriebszahnrades 58 mit Bezug auf die stationäre Ansatzschraube verschwenkt.

Die vorstehende Beschreibung bezieht sich im wesentlichen auf die rechte Seite einer Schneideinheit 12. Die hier vorgesehenen Teile sind in der Regel derart ausgebildet, dass sie auch auf der linken Seite der Schneideinheit eingesetzt werden können.

Das Gussgehäuse 112, das die Bürstenrolle 100 aufnimmt, ist in Schlitzen 122 verstellbar, die in der Tragkonsole 116 vorgesehen sind, so dass eine Bedienungsperson wahlweise die Lage der Bürstenrolle 100 verändern kann, wenn deren Borsten nach längeren Einsatzperioden beginnen zu verschleißen. Die Drehachse der Bürstenrolle kann dann näher an die rückwärtige Rolle verstellt werden, so dass die kürzeren Borsten dann wieder Kontakt mit der Mantelfläche der Rolle 118 haben. Wird bei einem etwaigen Verschleiß die Bürstenrolle 100 in dieser Weise verstellt, dann verändert sich ebenfalls der Abstand zwischen dem Abtriebszahnrad 94 und dem Antriebszahnrad 58. Auch in diesen Fällen bleibt es, wie es ausführlich im vorstehenden für die Verstellung des Abtriebszahnrades bei Schnitthöhenneueinstellung ausgeführt wurde, bei den betriebsgerechten Eingriffsverhältnissen zwischen Antriebszahnrad 58 und Abtriebszahnrad infolge der schamierartigen Anordnung von dem ersten und dem zweiten Schwenkteil 62 und 86. Wie bereits ausgeführt wurde, wird auch jetzt der Schwenkteil 62 das Zwischenzahnrad 66 auf einer unveränderbaren Distanz zu den entsprechenden Achsen halten und somit verhindern, dass das Zwischenzahnrad 66 außer Eingriff mit den Zähnen 70 und 96 des Antriebszahnrades 58 und des Abtriebszahnrades 94 kommen könnte.

Spindelmäher werden in vielen Größen und Formen gefertigt, und in Fig. 4 ist ein weiteres Ausführungsbeispiel 134 dargestellt, das sich besonders gut für solche Schneideinheiten eignet, bei denen die Achsen von Antriebszahnrad und Abtriebszahnrad weiter auseinander liegen. Man erkennt aus Fig. 4, dass dort der Abstand zwischen der Spindelwelle 24 und der Achse der Bürstenrolle größer ist als bei der Ausführung nach Fig. 2. In derartigen Fälllen wäre es unpraktisch, zur Übertragung der Antriebskraft von dem Antriebszahnrad auf das Abtriebszahnrad ein einziges Zwischzahnrad mit großem Durchmesser zu wählen. Die in Fig. 4 gezeigte Ausführung ist besonders gut geeignet für relativ lange Schneideinheiten, bei denen die Spindelwelle 24 relativ weit von der Zentralwelle 98 entfernt ist. Auch in diesem Fall ist ein Antriebszahnrad 58 auf der Spindelwelle 24 angeordnet. Ein erster Schwenkteil 136 kann um die Achse der Spindelwelle 24 drehen. Ein erstes Hilfszahnrad 138 ist an dem ersten Schwenkteil 136 angeordnet. Das Zwischenzahnrad 66 kämmt mit den Zähnen 140 des ersten Hilfszahnrades 138 und ist auf einer Welle 142 angeordnet, die ihrerseits in einem Endteil 144 des ersten Schwenkteils 136 gelagert ist. Das Abtriebszahnrad 94 ist wie bisher auf der Zentralwelle 98 für die Bürstenrolle angeordnet. Ein zweiter Schwenkteil 146 kann um die Achse der Zentralwelle 98 schwenken und nimmt etwa in seiner Mitte ein zweites Hilfszahnrad 148 auf. Die Zähne 150 des zweiten Hilfszahnrades 148 kämmen mit den Zähnen 96 des Abtriebszahnrades 94 und mit den Zähnen 68 des Zwischenzahnrades 66. Eine Öffnung 152 in dem Endteil 154 des zweiten Schwenkteils 148 nimmt die Welle 142 des Zwischenzahnrades 66 auf.

Der erste und der zweite Schwenkteil 136 und 146 nach dem Ausführungsbeispiel in Fig. 4 funktionieren in ähnlicher Art und Weise, wie die in Fig. 1 gezeigten Schwenkteil 62 und 86 und bewirken, dass der Abstand des Zwischenzahnrades 66 zu den entsprechenden Achsen auch dann konstant bleibt, wenn sich der Abstand zwischen dem Abtriebszahnrad 94 und dem Antriebszahnrad 58 bei einer Schnitthöhenneueinstellung ändert. Da das Zwischenzahnrad 66 seinen Abstand zu den Achsen des Abtriebszahnrades und zu dem Antriebszahnrad nicht ändert, können die beiden Hilfszahnräder 138 und 148 an ihren zugehörigen Schwenkteilen 136 und 146 ortsfest angeordnet werden. Beispielsweise nimmt der erste Schwenkteil 136 das Zwischenzahnrad 66 in einer festen Distanz zu der Achse der Spindelwelle 24 und der des Antriebszahnrades 58 auf. Das erste Hilfszahnrad 138 kann deshalb ortsfest am ersten Schwenkteil 136 montiert werden und kann im montierten Zustand ständig mit den Zähnen 70 und 68 des Antriebszahnrades 58 und des Zwischenzahnrades 66 kämmen, und zwar völlig unabhängig von der Schwenkstellung des ersten Schwenkteils 136. Entsprechend legt der zweite Schwenkteil 146 den konstanten Abstand fest, der zwischen dem Zwischenzahnrad 66, der Achse der Bürstenrolle und der des Abtriebszahnrades 94 besteht. Damit kann auch das zweite Hilfszahnrad 148 ortsfest an dem zweiten Schwenkteil 146 angeschlossen sein und kämmt ständig mit den Zähnen 68 und 96 des Zwischenzahnrades 66 und des Abtriebszahnrades 94. Wenn nun beispielsweise bei einer Schnitthöhenneueinstellung sich der Abstand zwischen dem Abtriebszahnrad 94 und dem Antriebszahnrad 58 ändert, dann verstellt sich das Zwischenzahnrad, wobei der erste und der zweite Schwenkteil 136 und 146 immer dazu beitragen, dass die Zähne der einzelnen Zahnräder im Eingriff bleiben, damit der Kraftfluss von der Spindelwelle 24 zu der Bürstenrolle nicht unterbrochen wird.

Zusammenfassend kann also festgestellt werden, dass beide Ausführungsbeispiele einen Mechanismus aufweisen, mit dem eine Bürstenrolle 100 angetrieben werden kann, deren Lage mit Bezug auf die Schneideinheit 12 einstellbar ist, um die Schnitthöhe der Spindel zu ändern oder um etwaigen Verschleiß der Borsten an der Bürstenrolle auszugleichen. Bei diesem Mechanismus bleiben die Zähne der einzelnen Zahnräder auch dann noch miteinander im Eingriff, wenn die Zahnräder sich gegeneinander verstellen, was bei einer Schnitthöhenneueinstellung und einer Nachstellung wegen Verschleißes vorkommt. Infolge der ineinander greifenden Zähne besteht immer ein Formschluss zur Übertragung des Antriebs von der Spindelwelle 24 der Schneidspindel 16 auf die Zentralwelle 98 der Bürstenrolle 100. Selbst bei einem Einsatz in nassem Gut tritt kein Durchrutschen auf. Die eingesetzten Teile unterliegen keinem oder nur einem geringen Verschleiß und benötigen daher eine geringe Wartung mit keinen oder nur minimalen Reparaturen, was aber bei einem Einsatz von Riemen der Fall wäre.

## Patentansprüche

1. Spindelmäher mit einer von einer Antriebsquelle aus antreibbaren Schneidspindel (16), einer auf dem Boden laufenden Rolle (118) und einem von der Antriebsquelle aus antreibbaren Rollenabstreifer (100), wobei über die auf dem Boden ablaufende Rolle (118) die Schnitthöhe der Schneidspindel (16) einstellbar und die Rolle (118) zusammen mit dem Rollenabstreifer (100) gegenüber der Schneidspindel (16) höhenverstellbar ist, gekennzeichnet durch ein mit dem Rollenabstreifer (100) drehfest verbundenes Abtriebszahnrad (94), ein mit der Antriebsquelle drehfest verbundenes Antriebszahnrad (58), ein mit dem Abtriebszahnrad (94) und mit dem Antriebszahnrad (58) mittel- oder unmittelbar im Eingriff stehendes Zwischenzahnrad (66), einen ersten um die Drehachse des Antriebszahnrades (58) verstellbaren Schwenkteil (62, 136) und durch einen zweiten um die Drehachse des Abtriebszahnrades (94) verstellbaren Schwenkteil (86, 146), wobei das Zwischenzahnrad (66) mit dem ersten und mit dem zweiten Schwenkteil (62, 136 und 86, 146) gekoppelt ist.

2. Spindelmäher nach Anspruch 1, dadurch gekennzeichnet, dass das Antriebszahnrad (58) mit der Spindelwelle (24) der Schneidspindel (16) gekoppelt ist.

3. Spindelmäher nach Anspruch 1, dadurch gekennzeichnet, dass das Abtriebszahnrad (94) gegenüber der auf dem Boden ablaufenden Rolle (118) verstellbar ist.

4. Spindelmäher nach Anspruch 1, dadurch gekennzeichnet, dass das Abtriebszahnrad (94) zusammen mit dem zweiten Schwenkteil (86, 146) verstellbar ist.

5. Spindelmäher nach Anspruch 4, dadurch gekennzeichnet, dass das Zwischenzahnrad (66) mit dem zweiten Schwenkteil (86, 146) verstellbar ist, wobei der erste Schwenkteil (62, 136) über das Zwischenzahnrad (66) verstellbar ist.

6. Spindelmäher nach Anspruch 5, dadurch gekennzeichnet, dass das Zwischenzahnrad (66) an dem ersten Schwenkteil (62, 136) und an dem zweiten Schwenkteil (86, 146) ortsfest gelagert ist.

7. Spindelmäher nach einem oder mehreren der vorherigen Ansprüche, dadurch gekennzeichnet, dass das Zwischenzahnrad (66) in einer Konsole (48) vertikal verstellbar geführt ist, die gegenüber der Drehachse des Antriebszahnrades (58) verstellbar ist.

8. Spindelmäher nach einem oder mehreren der vorherigen Ansprüche, dadurch gekennzeichnet, dass zwischen dem Antriebszahnrad (58) und dem Zwischenzahnrad (66) an dem ersten Schwenkteil 136 ein Hilfszahnrad (138) vorgesehen ist.

9. Spindelmäher nach einem oder mehreren der vorherigen Ansprüche, dadurch gekennzeichnet, dass zwischen dem Abtriebszahnrad (94) und dem Zwischenzahnrad (66) an dem zweiten Schwenkteil (146) ein Hilfszahnrad (148) vorgesehen ist.

## Claims

1. A cylinder mower with a cutting cylinder (16) drivable from a drive source, a roller (118) running on the ground and a roller stripper (100) drivable from the drive source, wherein the cutting height of the cutting cylinder (16) can be adjusted by means of the roller (118) running on the ground and the roller (118) together with the roller stripper (100) is adjustable in height relative to the cutting cylinder (16), characterized by a driven gearwheel (94) rotationally fast with the roller stripper (100), a driving gearwheel (58) rotationally fast with the drive source, an intermediate gearwheel (66) indirectly or directly in engagement with the driven gearwheel (94) and with the driving gearwheel (58), a first pivoted part (62, 136) movable about the axis of rotation of the driving gearwheel (58) and a second pivoted part (86, 146) movable about the axis of rotation of the driven gearwheel (94), wherein the intermediate gearwheel (66) is coupled to the first and the second pivoted parts (62, 136 and 86, 146).

2. A cylinder mower according to claim 1, characterized in that the driving gearwheel (58) is coupled to the cylinder shaft (24) of the cutting cylinder (16).

3. A cylinder mower according to claim 1, characterized in that the driven gearwheel (94) is adjustable relative to the roller (118) running on the ground.

4. A cylinder mower according to claim 1, characterized in that the driven gearwheel (94) is adjustable together with the second pivoted part (86, 146).

5. A cylinder mower according to claim 4, characterized in that the intermediate gearwheel (66) is adjustable with the second pivoted part (86, 146), while the first pivoted part (62, 136) is adjustable through the intermediate gearwheel (66).

6. A cylinder mower according to claim 5, characterized in that the intermediate gearwheel (66) is mounted in fixed position on the first pivoted part (62, 136) and on the second pivoted part (86, 146).

7. A cylinder mower according to one or more of the preceding claims, characterized in that the intermediate gearwheel (66) is guided to move vertically in a bracket (48), which is adjustable relative to the axis of rotation of the driving gearwheel (58).

8. A cylinder mower according to one or more of the preceding claims, characterized in that an auxiliary gearwheel (138) is provided on the first pivoted part (136) between the driving gearwheel (58) and the intermediate gearwheel (66).

9. A cylinder mower according to one or more of the preceding claims, characterized in that an auxiliary gearwheel (148) is provided on the second pivoted part (146) between the driven gearwheel (94) and the intermediate gearwheel (66).

## Revendications

1. Tondeuse à entraînement par cylindre, comportant un cylindre de coupe (16) pouvant être entraîné à partir d'une source d'entraînement, un rouleau (118) qui roule sur le sol et un rouleau racleur (100) qui peut être entraîné à partir de la source d'entraînement, et dans laquelle la hauteur de coupe du cylindre de coupe (16) est réglable par le rouleau qui se déplace sur le sol, le rouleau (118) étant réglable en hauteur conjointement avec le rouleau racleur (100) par rapport au cylindre de coupe (16), caractérisée par un pignon mené (94), qui est relié au rouleau racleur (100) d'une manière bloquée en rotation, un pignon d'entraînement (58) qui est relié à la source d'entraînement avec blocage en rotation, un pignon intermédiaire (66) qui engrène indirectement ou directement le pignon mené (94) et le pignon d'entraînement (58), une première partie pivotante (62,136) qui est réglable autour de l'axe de rotation du pignon d'entraînement (58) et une seconde partie pivotante (86,146) qui est réglable autour de l'axe de rotation du pignon mené (94), le pignon intermédiaire (66) étant couplé à la première partie pivotante et à la seconde partie pivotante (62,136 et 86,146).

2. Tondeuse à entraînement par cylindre selon la revendication 1, caractérisée en ce que le pignon d'entraînement (58) est couplé à l'arbre (24) du cylindre de coupe (16).

3. Tondeuse à entraînement par cylindre selon la revendication 1, caractérisée en ce que le pignon mené (94) est réglable par rapport au rouleau (118) qui roule sur le sol.

4. Tondeuse à entraînement par cylindre selon la revendication 1, caractérisée en ce que le pignon mené (94) est réglable conjointement avec al seconde partie pivotante (86,146).

5. Tondeuse à entraînement par cylindre selon la revendication 4, caractérisée en ce que le pignon intermédiaire (66) est réglable avec la seconde partie pivotante (86,146), la première partie pivotante (62,136) étant réglable au moyen du pignon intermédiaire (66).

6. Tondeuse à entraînement par cylindre selon la revendication 5, caractérisée en ce que le pignon intermédiaire (66) est monté de façon fixe sur la première partie pivotante (62,136) et sur la seconde partie pivotante (86,146).

7. Tondeuse à entraînement par cylindre selon une ou plusieurs des revendications précédentes, caractérisée en ce que le pignon intermédiaire (66) est guidé de manière à être réglable verticalement dans une console (48), qui est réglable par rapport à l'axe de rotation du pignon d'entraînement (58).

8. Tondeuse à entraînement par cylindre selon une ou plusieurs des revendications précédentes, caractérisée en ce qu'un pignon auxiliaire (138) est prévu sur la première partie pivotante (136), entre le pignon d'entraînement (58) et le pignon intermédiaire (66).

9. Tondeuse à entraînement par cylindre selon une ou plusieurs des revendications précédentes, caractérisée en ce qu'un pignon auxiliaire (148) est prévu sur la seconde partie pivotante (148) entre le pignon mené (94) et le pignon intermédiaire (66).
